# EUROPÄISCHE PATENTSCHRIFT

(11) **EP 3 046 799 B1**
(45) Veröffentlichungstag und Bekanntmachung des Hinweises auf die Patenterteilung: **01.09.2021**
(21) Anmeldenummer: 14766904.8
(22) Anmeldetag: 09.09.2014
(51) Int. Cl.: B60L 53/38, G01S 11/06, G05D 1/02, B60L 53/12

(54) **VERFAHREN UND SYSTEM ZUM BETREIBEN EINES FAHRZEUGS, INSBESONDERE EINES ENTLANG EINES BODENS VERFAHRBAREN FAHRZEUGS**
METHOD AND SYSTEM FOR OPERATING A VEHICLE, IN PARTICULAR A VEHICLE THAT CAN BE MOVED ALONG A GROUND
PROCÉDÉ ET SYSTÈME POUR FAIRE FONCTIONNER UN VÉHICULE, EN PARTICULIER UN VÉHICULE DÉPLAÇABLE LE LONG D'UN SOL

(30) Priorität: 16.09.2013 DE 102013015262
(43) Veröffentlichungstag der Anmeldung: 27.07.2016
(73) Patentinhaber: SEW-EURODRIVE GmbH & Co. KG, 76646 Bruchsal (DE)
(72) Erfinder: KIST, Alexander, 76131 Karlsruhe (DE); KUTZ, Michael, 76661 Philippsburg (DE); EGGER, Björn, 76646 Bruchsal (DE); RUBEY, Alexander, 750031 Eppingen (DE)
(86) Internationale Anmeldenummer: PCT/EP2014/002433
(87) Internationale Veröffentlichungsnummer: WO 2015/036112

(56) Entgegenhaltungen:
- EP-A1- 2 463 678
- WO-A1-2009/030563
- WO-A2-2014/023595
- US-A1- 2012 091 959
- US-B1- 8 111 141
- None

## Beschreibung

Die Erfindung betrifft ein Verfahren und ein System zum Betreiben eines Fahrzeugs, insbesondere eines entlang eines Bodens verfahrbaren Fahrzeugs.

In der Intralogistik sind fahrerlose Transportsysteme (FTS) und automatisch gesteuerte Fahrzeuge (AGV) bekannt.

**Aus der** US 2012/091959 A1 **ist ein Fahrzeugführungssystem mit Interface bekannt.**

**Aus der** US 8 111 141 B1 **ist als nächstliegender Stand der Technik ein Verfahren zur Bestimmung des Abstands aus einer empfangenen Signalstärke eines Niederfrequenz-Tags bekannt.**

**Aus der** EP 2 463 678 A1 **ist ein Antikollisionssystem bekannt.**

**Aus der** WO 2009/030563 A1 **ist eine flexible Schlüsselortung für passive Zugangs- und Fahrberechtigungssysteme.**

**Aus der** WO 2014/023595 A2 **ist ein Verfahren zur Positionierung durch Triangulation bekannt.**

Der Erfindung liegt daher die Aufgabe zugrunde, ein Verfahren und ein System weiterzubilden, wobei ein möglichst einfaches und kostengünstiges Betreiben erreichbar sein soll.

Erfindungsgemäß wird die Aufgabe bei dem Verfahren nach den in Anspruch 1 und bei dem System nach den in Anspruch 8 angegebenen Merkmalen gelöst.

Wichtige Merkmale der Erfindung bei dem Verfahren sind, dass es zum Betreiben eines Fahrzeugs, insbesondere eines entlang eines Bodens verfahrbaren Fahrzeugs, vorgesehen ist,
wobei das Fahrzeug Sender aufweist,
wobei am Boden zumindest ein Kennungsmittel angeordnet ist,
wobei ein jeweiliger Sender ein Abfragesignal sendet, wonach das Kennungsmittel ein Antwortsignal sendet,
wobei aus einer Signalstärke, insbesondere aus der Signalstärke des Abfragesignals, der Abstand zwischen dem jeweiligen Sender und dem jeweiligen Kennungsmittel bestimmt wird,
insbesondere wobei Abfragesignal und Antwortsignal in verschiedenen Frequenzbändern gesendet werden,
insbesondere wobei die Antennen des Senders und des Kennungsmittels derart ausgeführt und abgestimmt sind und die Frequenzbänder derart gewählt sind, dass das Abfragesignal als Nahfeld übertragen wird und das Antwortsignal als Fernfeld.

Von Vorteil ist dabei, dass der Abstand zum Sender aus der erfassten Signalstärke und der vom Kennungsmittel übertragenen entsprechenden Messinformation bestimmbar ist. Da mehrere Sender am Fahrzeug angeordnet sind, ist somit sogar die Relativposition aus den jeweiligen Abständen und den bekannten Positionen der Sender am Fahrzeug ermittelbar. Durch die Nahfeldübertragung des Abfragesignals ist eine geringe Reichweite der langwelligen Strahlung erreichbar und somit Störeinflüsse verringerbar. Durch Fernfeldübertragung vom Kennungsmittel zum Sender ist eine größere Reichweite als die Reichweite der genannten Nahfeldübertragung erreichbar. Somit ist sicher stellbar, dass die gemessene Signalstärke übertragbar ist.

Bei einer vorteilhaften Ausgestaltung umfasst der Sender eine Empfangsschaltung zum Empfang des von dem Kennungsmittel gesendeten Antwortsignals. Von Vorteil ist dabei, dass durch den Sender auch das Antwortsignal empfangbar ist.

Bei einer vorteilhaften Ausgestaltung senden nach Senden eines Aufwecksignals, insbesondere durch einen ersten Sender, die Sender des Fahrzeugs zeitlich nacheinander jeweils ein Abfragesignal, insbesondere Burst-Signal,
wobei danach, insbesondere nachdem das Senden aller Abfragesignale erfolgt ist, in dem vom Kennungsmittel gesendeten Antwortsignal die zu den jeweiligen Abfragesignalen, insbesondere Burst-Signalen, bestimmten Signalstärken enthalten sind, insbesondere übermittelt werden, insbesondere gemeinsam. Von Vorteil ist dabei, dass das Verfahren besonders effektiv und der Übertragungskanal ebenfalls effektiv ausnutzbar ist.

Bei einer vorteilhaften Ausgestaltung wird das Kennungsmittel aus einem oder dem Abfragesignal elektrisch versorgt. Von Vorteil ist dabei, dass die Kennungsmittel passiv betreibbar sind, wobei aus dem Abfragesignal ein Energiespeicher, insbesondere Kondensator, aufladbar ist und daraus das Kennungsmittel versorgbar ist.

Bei einer vorteilhaften Ausgestaltung wird eine elektronische Schaltung des Fahrzeugs aus den bestimmten Abständen und den auf das Fahrzeug bezogenen bekannten Positionen der Sender des Fahrzeugs die auf das Fahrzeug bezogene jeweilige Position des jeweiligen Kennungsmittels bestimmt. Von Vorteil ist dabei, dass eine einfache Lateration, insbesondere Trilateration oder Hyperbelateration, verwendbar ist, so dass eine Positionsbestimmung in 2D oder 3D schnell und einfach ausführbar ist.

Bei einer vorteilhaften Ausgestaltung wir, insbesondere von der elektronischen Schaltung, aus den auf das Fahrzeug bezogenen jeweiligen Positionen zumindest zweier jeweiliger Kennungsmittel die relative Ausrichtung des Fahrzeugs zu einem am Boden angeordneten Primärteil bestimmt wird,
insbesondere wobei die Kennungsmittel im Primärteil angeordnet sind,
wobei das Fahrzeug eine mit dem Primärteil zur Energieübertragung, insbesondere zur Versorgung eines Akkumulators des Fahrzeugs, induktiv koppelbare Sekundärwicklung aufweist,
insbesondere wobei das Fahrzeug zum Primärteil hingelenkt wird, insbesondere indem der Lenkwinkel einer Lenkeinheit derart gesteuert wird, dass das Fahrzeug zum Primärteil hingelenkt wird. Von Vorteil ist dabei, dass ein einfaches Erkennen und Hinlenken des Fahrzeugs zum Kennungsmittel ermöglicht ist.

Wichtige Merkmale bei dem System zur Durchführung eines vorgenannten Verfahrens sind, dass zwei oder mehr Kennungsmittel stationär angeordnet sind und das Fahrzeug, insbesondere das bewegbare Fahrzeug, zwei oder mehr Sender aufweist, insbesondere welche mit einer elektronischen Schaltung verbunden sind zur Bestimmung des Abstands zwischen einem jeweiligen Sender und einem jeweiligen Kennungsmittel.

Von Vorteil ist dabei, dass die Bestimmung in einfacher Weise ausführbar ist.

Bei einer vorteilhaften Ausgestaltung weist das Fahrzeug eine Sekundärwicklung auf, aus der ein Energiespeicher des Fahrzeugs beladbar ist, insbesondere aus dem der Traktionsantrieb des Fahrzeugs versorgbar ist. Von Vorteil ist dabei, dass eine induktive also kontaktlose und somit wartungsfreie Beladung ausführbar ist.

Bei einer vorteilhaften Ausgestaltung sind die Kennungsmittel in einem stationär angeordneten Primärteil angeordnet, das induktiv koppelbar ist mit der Sekundärwicklung,
insbesondere wobei das System eine Stromquelle zur Beaufschlagung des Primärteils mit einem Wechselstrom, insbesondere mit einem mittelfrequenten Wechselstrom., insbesondere mit einer Frequenz zwischen 10 und 1000 kHz,
wobei die Frequenz des Wechselstroms kleiner ist als die Frequenz des Abfragesignals, insbesondere also unterhalb der Frequenzbandes des Abfragesignals liegt. Von Vorteil ist dabei, dass das Primärteil in einfacher Weise lokalisierbar ist.

Bei einer vorteilhaften Ausgestaltung sind die an einem stationär angeordneten Primärteil angeordneten Kennungsmittel voneinander beabstandet,
insbesondere wobei eine Primärwicklung des Primärteils zwischen den Kennungsmitteln angeordnet ist. Von Vorteil ist dabei, dass die zum Primärteil relative Ausrichtung des Fahrzeugs bestimmbar ist.

Die Kennungsmittel sind voneinander beabstandet angeordnet, insbesondere entlang einer für das Fahrzeug vorgesehenen Bahnkurve angeordnet sind. Von Vorteil ist dabei, dass eine einfache Bahnführung des Fahrzeugs ausführbar ist.

Die elektronische Schaltung des Fahrzeugs weist ein Umschaltmittel auf, welches das jeweils als Sollposition für einen Regler verwendete Kennungsmittel bestimmt,
wobei der Regler den Lenkwinkel einer Lenkeinheit des Fahrzeugs derart steuert, dass das Fahrzeug zur Sollposition hingesteuert wird,
insbesondere wobei so lange auf das Kennungsmittel hin gesteuert wird bis die vom Kennungsmittel erfasste Signalstärke eines Abfragesignals einen kritischen Wert übersteigt und somit vom Umschaltmittel das in Fahrtrichtung zweitnächste Kennungsmittel als Sollposition bestimmt wird. Von Vorteil ist dabei, dass eine einfache Spurführung mittels Regler ermöglicht ist.

Bei einer vorteilhaften Ausgestaltung weisen die Kennungsmittel jeweils einen Speicher für Identifizierungsinformation auf und das Antwortsignal des jeweiligen Kennungsmittel eine Identifizierungsinformation, also Information für Identität des Kennungsmittels, aufweisen. Von Vorteil ist dabei, dass die Speicher erkennbar sind und der Reihe nach anfahrbar sind, insbesondere ist auch erkennbar, ob zwei Kennungsmittel einem selben Primärteil zugeordnet sind oder verschiedenen Primärteilen.

Bei einer vorteilhaften Ausgestaltung weist das Fahrzeug ein Zuordnungsmittel mit Speicher auf, wobei im Zuordnungsmittel, insbesondere im Speicher des Zuordnungsmittels, zu jeder Identifizierungsinformation eine Positionsinformation zugeordnet ist. Von Vorteil ist dabei, dass eine Navigation durch Anfahren der Kennungsmittel in einfacher Weise ermöglicht ist.

Weitere Vorteile ergeben sich aus den Unteransprüchen. Die Erfindung ist nicht auf die Merkmalskombination der Ansprüche beschränkt.

Die Erfindung wird nun anhand von Abbildungen näher erläutert:
In der Figur 1 ist ein erfindungsgemäßes System mit Fahrzeug 1 und stationär angeordnetem Kennungsmittel E schematisch gezeigt.
In der Figur 2 ist ein zugehöriges Verfahren zur Bestimmung der Position des Kennungsmittels E veranschaulicht.
In der Figur 3 sind auswertbar positionierte und nicht auswertbar positionierte Kennungsmittel E gezeigt.
In der Figur 4 ist ein Verfahren zur Bestimmung der Position des Kennungsmittels E veranschaulicht, wobei mehrere Sender (A1, A2, A3) synchronisiert betrieben werden.

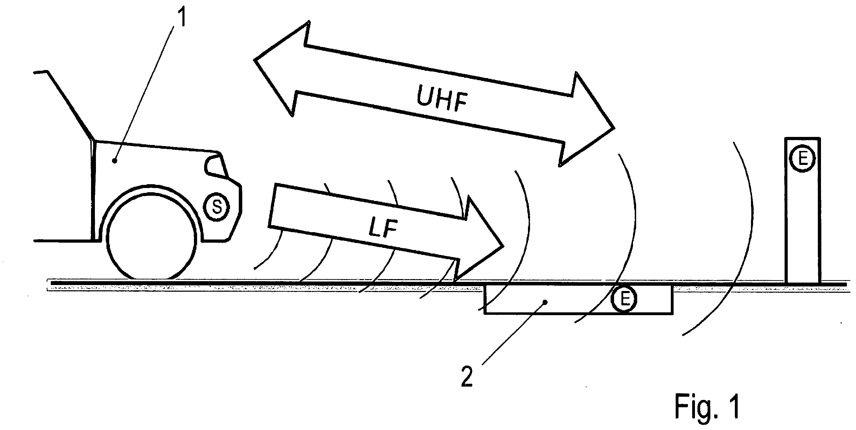

Wie in Figur 1 gezeigt, ist zumindest ein Kennungsmittel E stationär angeordnet und in einem auf einer Bodenfläche verfahrbaren Fahrzeug, insbesondere AGV oder FTS, sind ein oder mehrere Sender angeordnet.

Vorzugsweise weist das Fahrzeug an einer seiner Seiten, insbesondere an seiner Unterseite, eine Sekundärwicklung auf, die induktiv koppelbar ist an eine stationär angeordnete Primärwicklung. Dabei ist die Primärwicklung in einem Primärteil 2 angeordnet. Auf diese Weise ist ein Energiespeicher des Fahrzeugs kontaktlos beladbar mit Energie. Dazu wird die Primärwicklung mit einem Wechselstrom beaufschlagt und die in der Sekundärwicklung induzierte Spannung gleichgerichtet zur Versorgung des Energiespeichers, insbesondere Akkumulators.

Ein Kennungsmittel E ist im Primärteil angeordnet. Somit ist es ermöglicht, dass ein Sender S ein Abfragesignal sendet, beispielsweise ein Burst-Signal. Das Kennungsmittel E wird aus dem Abfragesignal versorgt und sendet ein Antwortsignal. Vorzugsweise übermittelt er dabei auch die detektierte Signalstärke des Senders. Der Sender ist dabei als eine derartige elektronische Schaltung ausgeführt, dass auch eine Empfangsschaltung integriert ist, welcher das Abfragesignal detektierbar macht.

Das Antwortsignal wird in einem anderen Frequenzband gesendet als das Abfragesignal. Wie in Figur 1 gezeigt, wird das Abfragesignal im LF-Frequenzband, also bevorzugst zwischen 20 kHz und 140kHz, gesendet und das Antwortsignal im UHF Frequenzband, insbesondere bevorzugt also zwischen 700 MHz und 10 GHz. Dabei ist das Kennungsmittel mit einer derart abgestimmten Antenne zum Senden des Antwortsignals ausgestattet, dass das Antwortsignal als elektromagnetische Welle des Fernfeldes vom Sender empfangbar ist. Entsprechend ist die zum Senden des Abfragesignals verwendete Antenne des Senders derart abgestimmt, dass das Abfragesignal als elektromagnetische Welle des Nahfeldes vom Kennungsmittel E empfangbar ist.

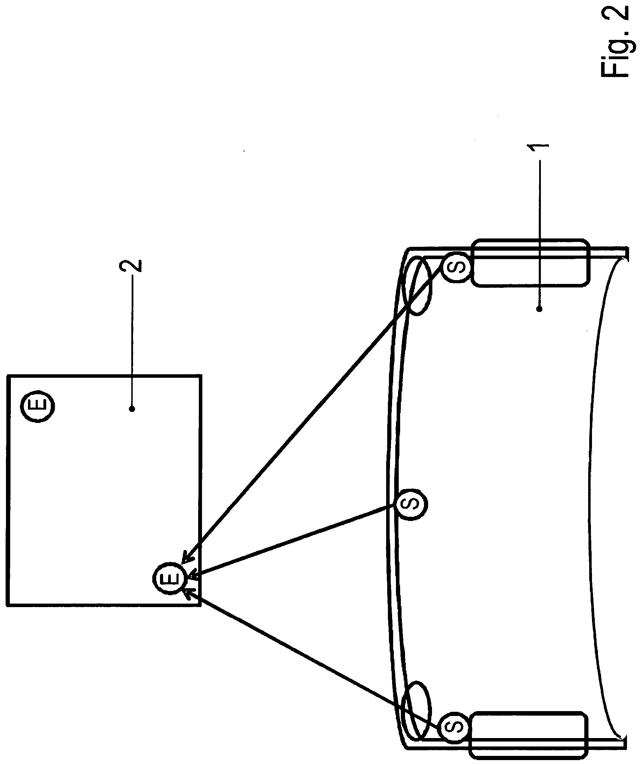

Wie in Figur 2 dargestellt, sind am Fahrzeug 1 mehrere Sender S angeordnet, die voneinander beabstandet sind und vorzugsweise nicht auf einer gemeinsamen Linie angeordnet sind. Auf diese Weise ist ermöglicht, dass die räumliche Position des Kennungsmittels relativ zum Fahrzeug 1 bestimmbar ist. Somit ist also die auf das Fahrzeug 1 bezogene relative räumliche Position bestimmbar.

Mittels der Anordnung zweier Kennungsmittel E, insbesondere im Primärteil, ist sogar die räumliche Ausrichtung des Fahrzeugs relativ zum Primärteil bestimmbar.

Mittels der beschriebenen Bestimmung der zum Primärteil 2 räumlichen Position und Ausrichtung ist das Heranfahren an die optimale Ladeposition, also diejenige Position und Ausrichtung des Fahrzeugs, bei welcher eine optimale Kopplung vorhanden ist, in einfacher Weise, insbesondere automatisch mittels eines Reglers, ausführbar. Auch eine visuelle Anzeige zum Anzeigen der Ausrichtung und Lage ist in einfacher Weise ausführbar.

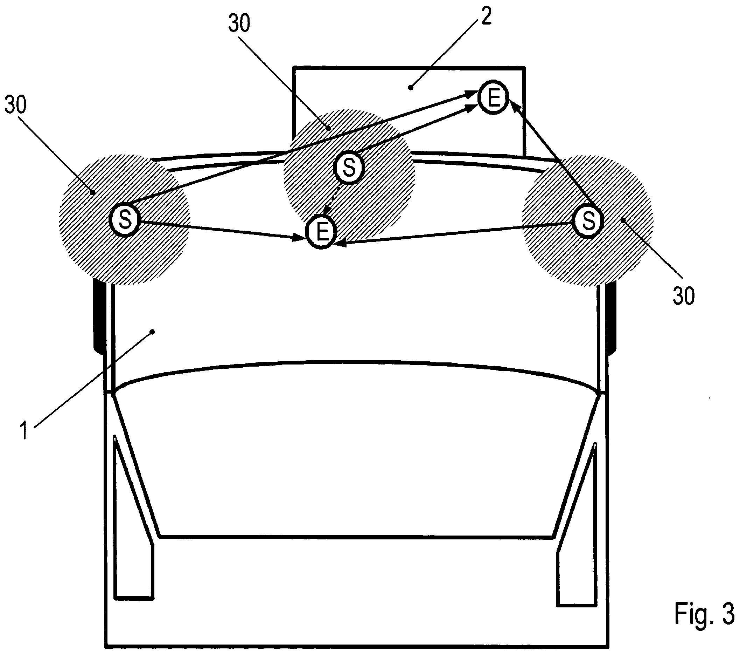

Wie in Figur 3 gezeigt, ist eine Bestimmung der Entfernung zwischen einem Sender S des Fahrzeugs und einem Kennungsmittel E nur möglich, wenn das Kennungsmittel E außerhalb des Sättigungsbereichs 30 angeordnet ist, also keiner allzu großen Sendestärke des Senders ausgesetzt ist. Denn in diesem Sättigungsberiech 30 wird das Kennungsmittel, insbesondere die in ihm integrierte Empfangsschaltung übersteuert und das Kennungsmittel E ist nur in der Lage die volle Aussteuerung, also eine maximale Empfangsamplitude, zu detektieren und somit als Antwortsignal zu senden.

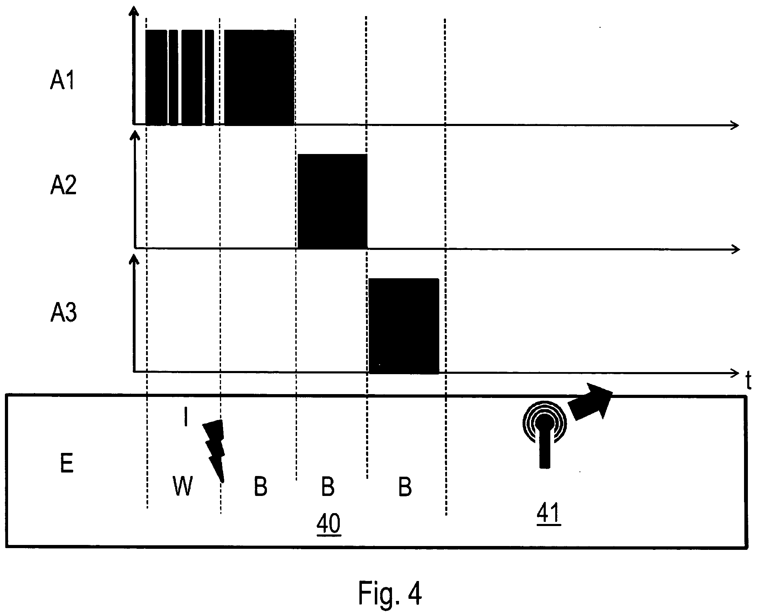

Wie in Figur 4 gezeigt, ist mittels eines synchronisierten Betriebs mehrerer Sender (S1, S2, S3) eine effektive und schnelle Bestimmung der Entfernung eines Kennungsmittels E zu den Sendern (S1, S2, S3) ausführbar. Dabei wird zuerst ein Aufweckmuster W, insbesondere also ein Wake Pattern, zur Auslösung eines jeweiligen Interrupts I gesendet, beispielsweise von einem ersten Sender S1. Darauf folgend sendet zunächst der erste Sender ein Burst-Signal B, so dass vom Kennungsmittel E die Signalstärke als erster Messwert der Messungen detektierbar ist.

Zeitlich nachfolgend sendet ein zweiter Sender S2 ein Burst-Signal B so dass vom Kennungsmittel E die Signalstärke als zweiter Messwert der Messungen detektierbar ist.

Wiederum zeitlich nachfolgend sendet ein dritter Sender S3 ein Burst-Signal B so dass vom Kennungsmittel E die Signalstärke als dritter Messwert der Messungen detektierbar ist.

Im darauffolgenden Antwortsignal 41 werden die detektierten Signalstärken vom Kennungsmittel E rückgemeldet. Aufgrund dieser Daten und der bekannten Positionen der Sender (S1, S2, S3) am Fahrzeug 1 sind die relative Position des Kennungsmittels E bezogen auf das Fahrzeug bestimmbar. Hierzu ist eine elektronische Schaltung stationär angeordnet und vorzugsweise mit den Sendern (S1, S2, S3) zur Datenübermittlung verbunden

Bei einem weiteren erfindungsgemäßen Ausführungsbeispiel werden von weiteren Sendern nachfolgend weitere Burst-Signale gesendet und dabei die entsprechenden Signalstärken detektiert und im Antwortsignal rückgemeldet. Auf diese Weise ist eine noch genauere Bestimmung und auch eine Bestimmung mit erhöhter Sicherheit ausführbar.

Bei einem weiteren erfindungsgemäßen Ausführungsbeispiel ist das Kennungsmittels E als RFID oder OFW-Sensor ausgeführt, wobei bevorzugst wiederum das Antwortsignal in einem anderen Frequenzband als das Abfragesignal gesendet wird.

Bei einem weiteren erfindungsgemäßen Ausführungsbeispiel werden die Kennungsmittel E nicht in einem Primärteil, sondern an der Verfahrfläche, über welche das Fahrzeug 1 verfahrbar ist, verlegt. Auf diese Weise ist eine Spur markierbar, entlang welcher das Fahrzeug führbar ist. Hierbei sind die Kennungsmittel E entlang der von ihnen markierten Spur voneinander jeweils beabstandet, insbesondere regelmäßig. Dabei ist der Abstand vorzugsweise derart gewählt, dass stets, also während des Abfahrens der Spur, zumindest zwei Kennungsmittel E im empfindlichen Bereich der Sender des Fahrzeugs angeordnet sind. Dabei ist der empfindliche Bereich derjenige Abstand, bei welchem keine Sättigung auftritt aber noch ein genügend gutes Signal-Rausch-Verhältnis vorhanden ist zur Bestimmung des Abstandes zwischen jeweiligem Sender S des Fahrzeugs und Kennungsmittel E.

Zum Abfahren der Spur bestimmt eine elektronische Schaltung des Fahrzeugs aus den im jeweiligen Antwortsignal des jeweiligen Kennungsmittels enthaltenen Signalstärken die auf das Fahrzeug bezogene Position des Kennungsmittels E und regelt den Lenkwinkel der Lenkeinheit des Fahrzeugs 1 derart, dass der Abstand möglichst klein wird. Dabei wird zunächst auf das in Fahrtrichtung nächstliegenden Kennungsmittel E hingeregelt und sobald dies eine maximale Signalstärke meldet oder die Signalstärke einen kritischen Wert überschreitet, wird auf das zweitnächstliegende Kennungsmittel hingeregelt und nicht mehr auf das in Fahrtrichtung nächstliegende, da dieses im Sättigungsbereich oder zu nahe am Sättigungsbereich angelangt ist.

### Bezugszeichenliste

1 Fahrzeug, insbesondere FTS oder AGV
2 Primärteil
30 Sättigungsbereich
40 Messungen des Kennungsmittels E
41 Antwortsignal
A1 Antenne eines ersten Senders
A2 Antenne eines zweiten Senders
A3 Antenne eines dritten Senders
E Kennungsmittel, insbesondere Empfänger des Kennungsmittels
W Aufweckmuster (Wake Pattern)
I Interrupt-Signal
B Burst-Signal
UHF Ultrahochfrequenz
LF Langwellenfrequenz

## Patentansprüche

1. Verfahren zum Betreiben eines Fahrzeugs (1), insbesondere eines entlang eines Bodens verfahrbaren Fahrzeugs (1),
wobei das Fahrzeug (1) Sender aufweist,
**wobei am Boden Kennungsmittel angeordnet sind,**
**wobei** ein jeweiliger Sender **des Fahrzeugs (1)** ein Abfragesignal sendet, wonach das **jeweilige** Kennungsmittel ein Antwortsignal (41) sendet,
wobei aus einer Signalstärke **des Abfragesignals** der Abstand zwischen dem jeweiligen Sender und dem jeweiligen Kennungsmittel bestimmt wird,
**wobei** Abfragesignal und Antwortsignal (41) in verschiedenen Frequenzbändern gesendet werden,
**wobei die Antennen des Senders und des jeweiligen Kennungsmittels derart ausgeführt und abgestimmt sind und die Frequenzbänder derart gewählt sind, dass das Abfragesignal als Nahfeld übertragen wird und das Antwortsignal (41) als Fernfeld,**
**wobei die Kennungsmittel voneinander beabstandet angeordnet sind entlang einer für das Fahrzeug (1) vorgesehenen Bahnkurve angeordnet sind,**
**dadurch gekennzeichnet, dass**
**eine elektronische Schaltung des Fahrzeugs (1) ein Umschaltmittel aufweist, welches das jeweils als Sollposition für einen Regler verwendete Kennungsmittel bestimmt,**
**wobei der Regler den Lenkwinkel einer Lenkeinheit des Fahrzeugs (1) derart steuert, dass das Fahrzeug (1) zur Sollposition hingesteuert wird,**
**wobei so lange auf das Kennungsmittel hin gesteuert wird bis die vom Kennungsmittel erfasste Signalstärke eines Abfragesignals einen kritischen Wert übersteigt und somit vom Umschaltmittel das in Fahrtrichtung zweitnächste Kennungsmittel als Sollposition bestimmt wird.**

2. Verfahren nach Anspruch 1,
**dadurch gekennzeichnet, dass**
der Sender eine Empfangsschaltung umfasst zum Empfang des von dem Kennungsmittel gesendeten Antwortsignals (41).

3. Verfahren nach mindestens einem der vorangegangenen Ansprüche,
**dadurch gekennzeichnet, dass**
nach Senden eines Aufwecksignals, insbesondere durch einen ersten Sender, die Sender des Fahrzeugs (1) zeitlich nacheinander jeweils ein Abfragesignal, insbesondere Burst-Signal, senden,
wobei danach, insbesondere nachdem das Senden aller Abfragesignale erfolgt ist, in dem vom Kennungsmittel gesendeten Antwortsignal (41) die zu den jeweiligen Abfragesignalen, insbesondere Burst-Signalen, bestimmten Signalstärken enthalten sind, insbesondere übermittelt werden, insbesondere gemeinsam.

4. Verfahren nach mindestens einem der vorangegangenen Ansprüche,
**dadurch gekennzeichnet, dass**
das Kennungsmittel aus einem oder dem Abfragesignal elektrisch versorgt wird.

5. Verfahren nach mindestens einem der vorangegangenen Ansprüche,
**dadurch gekennzeichnet, dass**
eine elektronische Schaltung des Fahrzeugs (1) aus den bestimmten Abständen und den auf das Fahrzeug (1) bezogenen bekannten Positionen der Sender des Fahrzeugs (1) die auf das Fahrzeug (1) bezogene jeweilige Position des jeweiligen Kennungsmittels bestimmt wird.

6. Verfahren nach mindestens einem der vorangegangenen Ansprüche,
**dadurch gekennzeichnet, dass**
insbesondere von der elektronischen Schaltung, aus den auf das Fahrzeug (1) bezogenen jeweiligen Positionen zumindest zweier jeweiliger Kennungsmittel die relative Ausrichtung des Fahrzeugs (1) zu einem am Boden angeordneten Primärteil (2) bestimmt wird,
insbesondere wobei die Kennungsmittel im Primärteil (2) angeordnet sind,
**wobei** das Fahrzeug (1) eine mit dem Primärteil (2) zur Energieübertragung, insbesondere zur Versorgung eines Akkumulators des Fahrzeugs (1), induktiv koppelbare Sekundärwicklung aufweist,
wobei das Fahrzeug (1) zum Primärteil (2) hingelenkt wird, insbesondere indem der Lenkwinkel einer Lenkeinheit derart gesteuert wird, dass das Fahrzeug (1) zum Primärteil (2) hingelenkt wird.

7. System zur Durchführung eines Verfahrens nach mindestens einem der vorangegangenen Ansprüche,
**dadurch gekennzeichnet, dass**
zwei oder mehr Kennungsmittel stationär angeordnet sind
das Fahrzeug (1), insbesondere das bewegbare Fahrzeug (1), zwei oder mehr Sender aufweist, welche mit einer elektronischen Schaltung verbunden sind zur Bestimmung des Abstands zwischen einem jeweiligen Sender und einem jeweiligen Kennungsmittel,
**die Kennungsmittel voneinander beabstandet angeordnet sind, insbesondere entlang einer für das Fahrzeug (1) vorgesehenen Bahnkurve angeordnet sind,**
**wobei die elektronische Schaltung des Fahrzeugs (1) ein Umschaltmittel aufweist, welches das jeweils als Sollposition für einen Regler verwendete Kennungsmittel bestimmt,**
**wobei der Regler den Lenkwinkel einer Lenkeinheit des Fahrzeugs (1) derart steuert, dass das Fahrzeug (1) zur Sollposition hingesteuert wird,**
**wobei so lange auf das Kennungsmittel hin gesteuert wird bis die vom Kennungsmittel erfasste Signalstärke eines Abfragesignals einen kritischen Wert übersteigt und somit vom Umschaltmittel das in Fahrtrichtung zweitnächste Kennungsmittel als Sollposition bestimmt wird.**

8. System nach Anspruch 7,
**dadurch gekennzeichnet, dass**
das Fahrzeug (1) eine Sekundärwicklung aufweist, aus der ein Energiespeicher des Fahrzeugs (1) beladbar ist, insbesondere aus dem der Traktionsantrieb des Fahrzeugs (1) versorgbar ist.

9. System nach Anspruch 7 oder 8,
**dadurch gekennzeichnet, dass**
die Kennungsmittel in einem stationär angeordneten Primärteil (2) angeordnet sind, das induktiv koppelbar ist mit der Sekundärwicklung,
insbesondere wobei das System eine Stromquelle zur Beaufschlagung des Primärteils (2) mit einem Wechselstrom, insbesondere mit einem mittelfrequenten Wechselstrom., insbesondere mit einer Frequenz zwischen 10 und 1000 kHz,
wobei die Frequenz des Wechselstroms kleiner ist als die Frequenz des Abfragesignals, insbesondere also unterhalb der Frequenzbandes des Abfragesignals liegt.

10. System nach einem der Ansprüche 7 bis 9,
**dadurch gekennzeichnet, dass**
die an einem stationär angeordneten Primärteil (2) angeordneten Kennungsmittel voneinander beabstandet sind,
insbesondere wobei eine Primärwicklung des Primärteils (2) zwischen den Kennungsmitteln angeordnet ist.

11. System nach einem der Ansprüche 7 bis 10,
**dadurch gekennzeichnet, dass**
die Kennungsmittel jeweils einen Speicher für Identifizierungsinformation aufweisen und das Antwortsignal (41) des jeweiligen Kennungsmittel eine Identifizierungsinformation, also Information für Identität des Kennungsmittels, aufweisen.

12. System nach einem der Ansprüche 7 bis 11,
**dadurch gekennzeichnet, dass**
das Fahrzeug (1) ein Zuordnungsmittel mit Speicher aufweist, wobei im Zuordnungsmittel, insbesondere im Speicher des Zuordnungsmittels, zu jeder Identifizierungsinformation eine Positionsinformation zugeordnet ist.

## Claims

1. Method for operating a vehicle (1), in particular a vehicle (1) that can move along a ground,
wherein the vehicle (1) has transmitters,
wherein identifier means are arranged on the ground,
wherein a particular transmitter of the vehicle (1) sends an interrogation signal, after which the relevant identifier means sends a response signal (41),
wherein the distance between the relevant transmitter and the relevant identifier means is determined from the signal strength of the interrogation signal,
wherein the interrogation signal and response signal (41) is sent in different frequency bands,
wherein the antennae of the transmitter and of the relevant identifier means are configured and coordinated, and the frequency bands selected, in such a way that the interrogation signal is transmitted in the near field and the response signal (41) is transmitted in the far field,
wherein the identifier means are spaced apart from one another along a trajectory intended for the vehicle (1),
**characterised in that**
an electronic circuit of the vehicle (1) has a switch-over means, which determines the identifier means used in each case as the target position for a controller,
wherein the controller controls the steering angle of a steering unit of the vehicle (1) in such a way that the vehicle (1) is steered towards the target position,
wherein steering towards the identifier means is performed until such a point as the signal strength, detected by the identifier means, of an interrogation signal exceeds a critical value and the switch-over means thus determines the second-closest identifier means in the direction of travel as the target position.

2. Method according to claim 1,
**characterised in that**
the transmitter comprises a receiver circuit for receiving the response signal (41) sent by the identifier means.

3. Method according to at least one of the preceding claims,
**characterised in that**
once a wake-up signal has been sent, in particular by a first transmitter, the transmitters of the vehicle (1) each successively send an interrogation signal, in particular a burst signal, wherein thereafter, in particular after all the interrogation signals have been sent, the signal strengths determined in relation to each interrogation signal, in particular the burst signals, are contained in the response signal (41) sent by the identifier means, in particular are communicated, in particular together.

4. Method according to at least one of the preceding claims,
**characterised in that**
the identifier means are supplied with electricity from a or the interrogation signal.

5. Method according to at least one of the preceding claims,
**characterised in that**
the particular position, based on the vehicle (1), of the relevant identifier means is determined from the specific distances and the known positions, based on the vehicle (1), of the transmitters of the vehicle (1), an electronic circuit of the vehicle (1).

6. Method according to at least one of the preceding claims,
**characterised in that**
from the relevant positions, based on the vehicle (1), of at least two particular identifier means, the electronic circuit in particular determines the relative orientation of the vehicle (1) in relation to a primary component (2) arranged on the ground,
in particular wherein the identifier means are arranged in the primary component (2), wherein the vehicle (1) has a secondary winding that can be inductively coupled to the primary component (2) for transmitting energy, in particular for supplying power to an accumulator of the vehicle (1),
wherein the vehicle (1) is steered towards the primary component (2), in particular by controlling the steering angle of a steering unit such that the vehicle (1) is steered towards the primary component (2).

7. System for carrying out a method according to at least one of the preceding claims, **characterised in that**
two or more identifier means are immovably arranged,
the vehicle (1), in particular the movable vehicle (1), has two or more transmitters that are connected to an electronic circuit for determining the distance between a particular transmitter and a particular identifier means,
the identifier means are spaced apart from one another, in particular along a trajectory intended for the vehicle (1),
wherein the electronic circuit of the vehicle (1) has a switch-over means, which determines the identifier means used in each case as the target position for a controller,
wherein the controller controls the steering angle of a steering unit of the vehicle (1) in such a way that the vehicle (1) is steered towards the target position,
wherein steering towards the identifier means is performed until such a point as the signal strength, detected by the identifier means, of an interrogation signal exceeds a critical value and the switch-over means thus determines the second-closest identifier means in the direction of travel as the target position.

8. System according to claim 7,
**characterised in that**
the vehicle (1) has a secondary winding from which an energy storage device of the vehicle (1) can be charged, in particular from which power can be supplied to the traction drive of the vehicle (1).

9. System according to either claim 7 or claim 8,
**characterised in that**
the identifier means are arranged in an immovably arranged primary component (2) that can be inductively coupled to the secondary winding,
in particular wherein the system a current source for feeding the primary component (2) an alternating current, in particular a medium-frequency alternating current, in particular having a frequency between 10 and 1,000 kHz,
wherein the frequency of the alternating current is lower than the frequency of the interrogation signal, in particular therefore below the frequency band of the interrogation signal.

10. System according to any of claims 7 to 9,
**characterised in that**
the identifier means arranged on an immovably arranged primary component (2) are spaced apart from one another,
in particular wherein a primary winding of the primary component (2) is arranged between the identifier means.

11. System according to any of claims 7 to 10,
**characterised in that**
the identifier means each have a memory for identification information, and the response signal (41) of each identifier means has a piece of identification information, i.e. information for identifying the identifier means.

12. System according to any of claims 7 to 11,
**characterised in that**
the vehicle (1) has an allocation means having a memory, wherein a piece of positional information is allocated to each piece of identification information in the allocation means, in particular in the memory of the allocation means.

## Revendications

1. Procédé permettant de faire fonctionner un véhicule (1), en particulier un véhicule (1) déplaçable le long d'un sol,
le véhicule (1) présentant un émetteur,
des repères étant disposés au sol,
un émetteur respectif du véhicule (1) émettant un signal d'interrogation à la suite de quoi le repère émet un signal de réponse (41),
la distance entre l'émetteur respectif et le repère respectif étant déterminée à partir d'une intensité de signal du signal d'interrogation,
le signal d'interrogation et le signal de réponse (41) étant émis dans différentes bandes de fréquence,
les antennes de l'émetteur et du repère respectif étant réalisées et accordées de telle sorte et les bandes de fréquences étant sélectionnées de telle sorte que le signal d'interrogation est transmis en champ proche et le signal de réponse (41) est transmis en champ lointain,
les repères étant disposés à distance les uns des autres le long d'une courbe de trajectoire prévue pour le véhicule (1),
**caractérisé en ce qu'**un circuit électronique du véhicule (1) présente un moyen de commutation qui détermine le repère utilisé respectivement comme une position de consigne pour un régulateur,
le régulateur commandant l'angle de braquage d'une unité de direction du véhicule (1) de telle sorte que le véhicule (1) est dirigé vers la position de consigne,
dans lequel on se dirige vers le repère jusqu'à ce que l'intensité de signal d'un signal d'interrogation, détectée par le repère, dépasse une valeur critique, et le moyen de commutation détermine donc le deuxième repère le plus proche dans le sens de la marche comme position de consigne.

2. Procédé selon la revendication 1, **caractérisé en ce que** l'émetteur comprend un circuit de réception pour recevoir le signal de réponse (41) émis par le repère.

3. Procédé selon au moins l'une des revendications précédentes, **caractérisé en ce qu'**après l'émission d'un signal de réveil, en particulier par un premier émetteur, les émetteurs du véhicule (1) émettent respectivement un signal d'interrogation, en particulier un signal en rafale, successivement dans le temps,
dans lequel, par la suite, en particulier après que l'émission de tous les signaux d'interrogation a été effectuée, dans le signal de réponse (41) émis par le repère, les intensités de signal déterminées pour les signaux d'interrogation respectifs, en particulier les signaux en rafale, sont contenues, en particulier sont transmises, en particulier ensemble.

4. Procédé selon au moins l'une des revendications précédentes, **caractérisé en ce que** le repère est alimenté en électricité par un ou le signal d'interrogation.

5. Procédé selon au moins l'une des revendications précédentes, **caractérisé en ce qu'**un circuit électronique du véhicule (1) détermine à partir des distances déterminées et des positions connues par rapport au véhicule (1) des émetteurs du véhicule (1) la position respective par rapport au véhicule (1) du repère respectif.

6. Procédé selon au moins l'une des revendications précédentes, **caractérisé en ce qu'**en particulier le circuit électronique détermine à partir des positions respectives par rapport au véhicule (1) d'au moins deux repères respectifs l'orientation relative du véhicule (1) par rapport à une partie primaire (2) disposée au sol,
les repères étant en particulier disposés dans la partie primaire (2),
le véhicule (1) présentant un enroulement secondaire pouvant être couplé par induction à la partir primaire (2) pour la transmission d'énergie, en particulier pour l'alimentation d'un accumulateur du véhicule (1),
le véhicule (1) étant guidé vers la partie primaire (2), en particulier **en ce que** l'angle de braquage d'une unité de direction est commandé de telle sorte que le véhicule (1) est guidé vers la partie primaire (2).

7. Système permettant d'effectuer un procédé selon au moins l'une des revendications précédentes, **caractérisé en ce que**
deux ou plusieurs repères sont disposés de manière stationnaire,
le véhicule (1), en particulier le véhicule déplaçable (1), présente deux ou plusieurs émetteurs qui sont reliés à un circuit électronique pour déterminer la distance entre un émetteur respectif et un repère respectif,
les repères sont disposés à distance les uns des autres, en particulier le long d'une courbe de trajectoire prévue pour le véhicule (1),
le circuit électronique du véhicule (1) présentant un moyen de commutation qui détermine le repère utilisé respectivement comme position de consigne pour un régulateur,
le régulateur commandant l'angle de braquage d'une unité de direction du véhicule (1) de telle sorte que le véhicule (1) est dirigé vers la position de consigne,
dans lequel on se dirige vers le repère jusqu'à ce que l'intensité de signal d'un signal d'interrogation, détectée par le repère, dépasse une valeur critique, et le moyen de commutation détermine donc le deuxième repère le plus proche dans le sens de la marche comme position de consigne.

8. Système selon la revendication 7, **caractérisé en ce que** le véhicule (1) présente un enroulement secondaire à partir duquel un accumulateur d'énergie du véhicule (1) peut être chargé, en particulier peut être alimenté par l'entraînement de traction du véhicule (1).

9. Système selon la revendication 7 ou 8, **caractérisé en ce que**
les repères sont disposés dans une partie primaire (2) disposée de manière stationnaire et qui peut être couplée par induction à l'enroulement secondaire,
le système comprenant en particulier une source de courant pour appliquer à la partie primaire (2) un courant alternatif, en particulier un courant alternatif moyenne fréquence, en particulier d'une fréquence comprise entre 10 et 1000 kHz,
la fréquence du courant alternatif étant inférieure à la fréquence du signal d'interrogation, se situant donc en particulier au-dessous de la bande de fréquence du signal d'interrogation.

10. Système selon l'une quelconque des revendications 7 à 9, **caractérisé en ce que**
les repères disposés sur une partie primaire (2) disposée de manière stationnaire sont espacés les uns des autres,
en particulier dans lequel un enroulement primaire de la partie primaire (2) est disposé entre les repères.

11. Système selon l'une quelconque des revendications 7 à 10, **caractérisé en ce que** les repères présentent respectivement une mémoire pour des informations d'identification, et le signal de réponse (41) du repère respectif présente une information d'identification, donc une information concernant l'identité du repère.

12. Système selon l'une quelconque des revendications 7 à 11, **caractérisé en ce que** le véhicule (1) présente un moyen d'attribution doté d'une mémoire, une information de position étant attribuée dans le moyen d'attribution, en particulier dans la mémoire du moyen d'attribution, à chaque information d'identification.
